Europäisches Patentamt

European Patent Office

Office européen des brevets

(11) Veröffentlichungsnummer: **0 176 823**
**A1**

(12) **EUROPÄISCHE PATENTANMELDUNG**

(21) Anmeldenummer: **85111445.4**

(22) Anmeldetag: **10.09.85**

(51) Int. Cl.⁴: **H 02 M 7/10**

(30) Priorität: **19.09.84 DE 3434272**

(43) Veröffentlichungstag der Anmeldung:
**09.04.86 Patentblatt 86/15**

(84) Benannte Vertragsstaaten:
**AT CH DE FR GB LI NL**

(71) Anmelder: **Deutsche Thomson-Brandt GmbH**
**Hermann-Schwer-Strasse 3**
**D-7730 Villingen-Schwenningen(DE)**

(72) Erfinder: **Sternad, Rolf**
**Breslauerstrasse 11**
**D-7730 Villingen-Schwenningen(DE)**

(54) **Spannungsvervielfacherschaltung.**

㊼ Spannungsvervielfacherschaltungen, die Graetzgleichrichter statt Einweg- oder Doppelweggleichrichter verwenden, besitzen einen besseren Wirkungsgrad und vorteilhafte Wickelraumausnutzung des Netztransformators. Die Erfindung zeigt an hand von vier Schaltungsbeispielen wie aus nur einer Sekundärwicklung mehrere Gleichspannungen mit gleicher oder unterschiedlicher Polung und bis zum Faktor drei höherem Betrag in Graetzschaltung erzeugt werden können.

Fig. 4

**EP 0 176 823 A1**

Postfach 20 60
7730 Villingen-Schwenningen

0176823

8. August 1984

T-PA 512

PATENTANMELDUNG

_____

--------------------------------------------------------

Spannungsvervielfacherschaltung

--------------------------------------------------------

Die Erfindung betrifft eine Spannungsvervielfacherschaltung nach den Oberbegriffen der beiden nebengeordneten Ansprüchen.

Es ist bekannt, daß die sogenannte Graetzgleichrichtung
Vorteile gegenüber der Einweg- und der Doppelweg (Mittelpunkt-) gleichrichtung besitzt, die einerseits in einer
besseren Ausnutzung des Wickelraumes des Transformators
und andererseits in dem besseren Wirkungsgrad bestehen,
indem beide Stromphasen zur Gleichrichtung herangezogen
werden. Der einzige Nachteil ist, daß die Sekundärwicklung
nicht unmittelbar geerdet werden kann. Das kann in Einzelfällen zu kapazitiver Oberwellenstörung führen. Das läßt
sich aber meistens durch Abblockung der Wicklung gegen
Masse beseitigen. Auch bezüglich magnetischer Ausstreuung
ist die Graetzgleichrichtung optimal.

Deutsche Thomson-Brandt GmbH
Postfach 20 60
7730 Villingen-Schwenningen

8. August 1984
T-PA 512

0176823

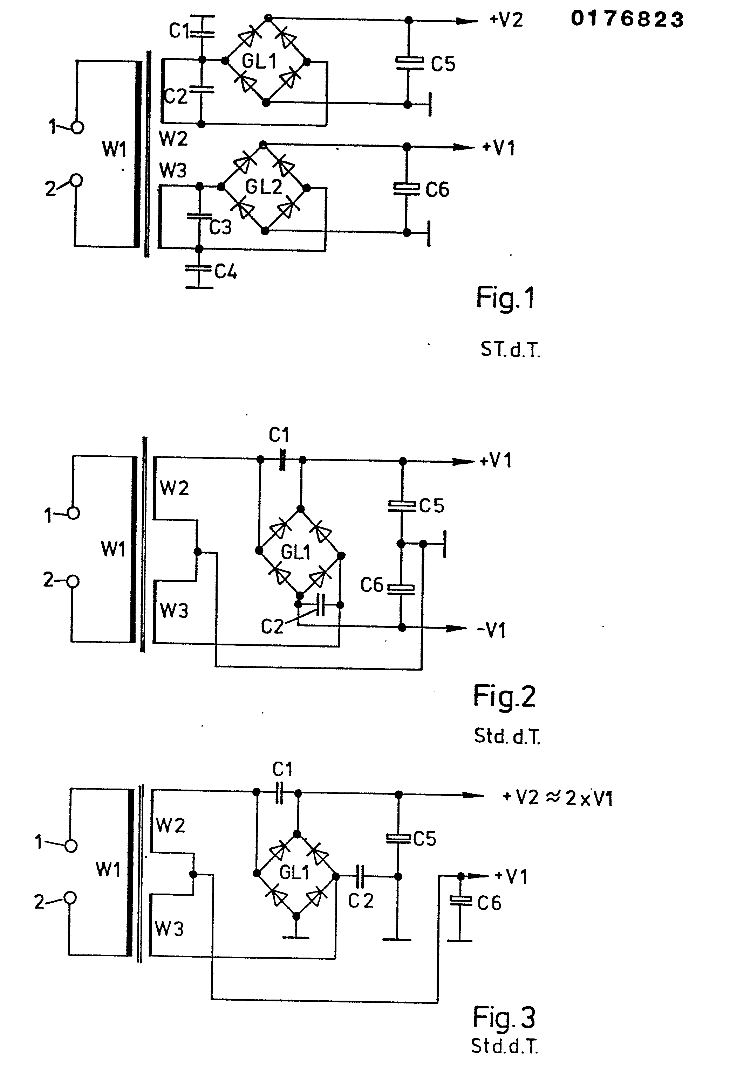

Sollen mehrere Spannungen verschiedener Größe durch Graetzgleichrichtung erzeugt werden, sind entsprechend viele Sekundärwicklungen und Gleichrichter notwendig. Beispielsweise können zwei verschieden große Gleichspannungen gemäß einer in Figur 1 gezeigten bekannten Schaltung erzeugt werden.

Werden zwei gleichgroße, aber entgegengesetzt gepolte Gleichspannungen aus nur einem Graetzgleichrichter gewonnen, kann dies mit der in Figur 2 gezeigten bekannten Schaltung geschehen.

Figur 3 stellt im Prinzip dieselbe Schaltung dar. Durch Verlegung des Massepunktes erhält man zwei gleichgepolte, aber um etwa den Faktor zwei größenverschiedene Spannungen.

Die Aufgabe, die der Erfindung zugrunde lag, ging von diesen bekannten Lösungen aus und forderte mehrere, verschiedene Spannungen aus nur einer Sekundärwicklung, wobei die Charakteristik der Graetzgleichrichtung erhalten bleiben sollte.

Ferner wird gefordert, daß insbesondere bei Kleintransformatoren Wickelraum eingespart wird und die reduzierte Zahl der Wicklungen den Transformator verbilligt.

Diese Aufgabe wird für die Oberbegriffe der beiden nebengeordneten Ansprüche erfindungsgemäß nach den jeweiligen Kennzeichen gelöst. Weitere Einzelheiten sind Unteransprüchen und der Beschreibung von Ausführungsbeispielen zu entnehmen.

Deutsche Thomson-Brandt GmbH
Postfach 20 60
7730 Villingen-Schwenningen

8. August 1984
T-PA 512

**0176823**

Diese Schaltungen bieten sich vor allem dort an, wo
die höhere Spannung nur mit geringem Laststrom beaufschlagt wird. Es können in diesen Fällen sehr preiswerte Dioden in Graetzschaltung für den zweiten Gleichrichter eingesetzt werden sowie relativ kleine Koppelkondensatoren. Die durch den Fortfall einer separaten
Wicklung eingesparten beiden Störschutzkondensatoren
liegen mit den Koppelkondensatoren preislich etwa gleich,
so daß außer der besseren Ausnutzung des Wickelraumes
noch kostenseitige Vorteile entstehen.

Die Figuren 1, 2 und 3 zeigen bekannte Schaltungen und
wurden in der Einleitung besprochen.

Ausführungsbeispiele der Erfindung werden nachfolgend
an hand der Zeichnung beschrieben. Diese zeigt in

Figur 4 eine Grundschaltung, die zwei gleichgepolte
Ausgangsleichspannungen liefert, wobei
$V_2 \approx 2 \times V_1$;

Figur 5 eine Variante von Figur 4, die zwei gegengepolte und etwa gleichgroße Ausgangsgleichspannungen liefert;

Figur 6 eine Erweiterung der Schaltung nach Figur 2,
so daß eine Zusatzgleichspannung gewonnen wird,
die doppelt so hoch wie + $V_1$ bzw. - $V_1$ ist;

Deutsche Thomson-Brandt GmbH
Postfach 2060
7730 Villingen-Schwenningen
**0176823**
8. August 1984
T-PA 512

Figur 7 eine Aufstockung der Zusatzgleichspannung
gemäß Figur 6 bewirkt nochmalige Erhöhung.


Sich entsprechende Positionen in den Figuren 1 bis 7
erhielten die gleiche Bezeichnung.

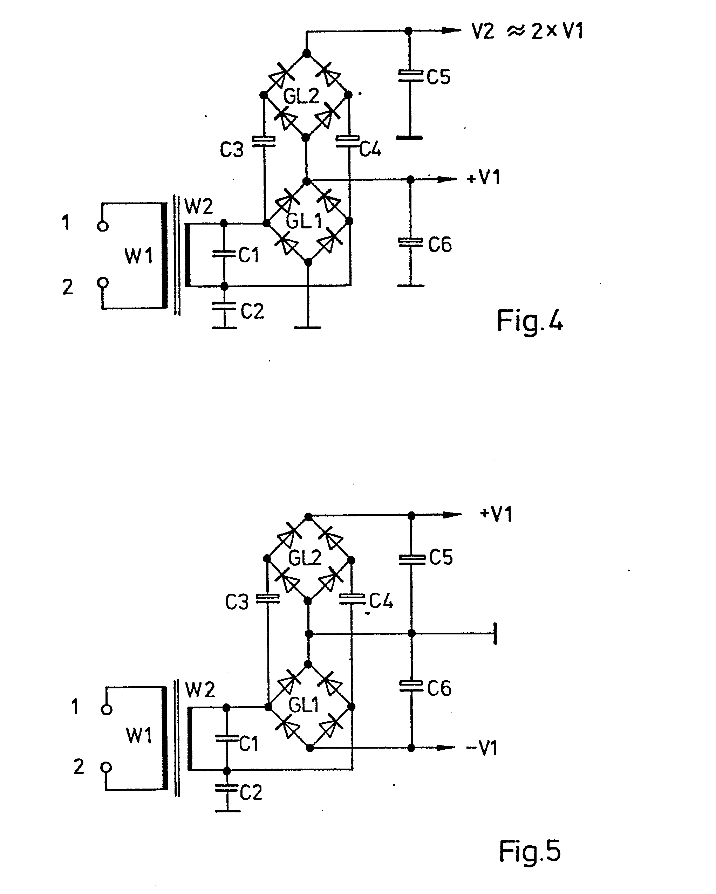

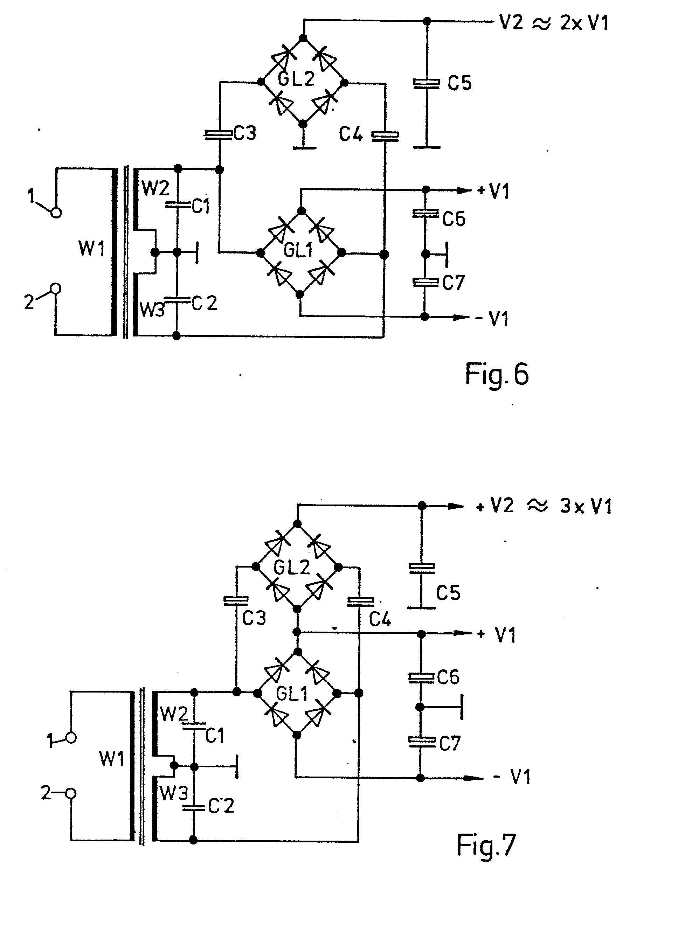

Die Grundschaltung zeigt Figur 4. Über die Kondensatoren
C3 und C4 ist ein zweiter Graetzgleichrichter GL2 angeschlossen, dessen Minuspol mit dem Pluspol des ersten
Graetzgleichrichters GL1 verbunden ist. Die Spannung
V2 ist gleichgepolt wie die Spannung V1, jedoch doppelt
so hoch. Während der Netztransformator in den Figuren
1, 2 und 3 jeweils zwei Sekundärwicklungen W2 und W3
besitzt, sind in den Figuren 4 und 5 nur jeweils eine
Sekundärwicklung W2 notwendig. Die Primärwicklung W1
der Netztransformatoren in allen Figuren ist jeweils
an den Anschlußpunkten 1 und 2 mit dem Wechselspannungsnetz verbunden. In Figur 6 und 7 liefern die Teilwicklungen W2/W3 insgesamt je drei Spannungen.

Eine Schaltungsvariante der Figur 4 zeigt Figur 5. Aus
der einzigen Sekundärwicklung W2 werden die gegengepolten
und etwa gleichgroßen Gleichspannunge + $V_1$ und - $V_1$
gewonnen.

In Anwendung der erfindungsgemäßen Schaltung kann auch
die konventionelle Schaltung gemäß Figur 2 so erweitert
werden, daß wie in Figur 6 gezeigt, eine Zusatzspannung
gewonnen wird, die doppelt so hoch wie die Gleichspannung

Deutsche Thomson-Brandt GmbH
Postfach 20 60
7730 Villingen-Schwenningen
8. August 1984
T-PA 512

**0176823**

$+ V_1$ bzw. $- V_1$ ist. Hier in Figur 6 wie auch in den Schaltungen der Figuren 4, 5 und 7 sind die Kondensatoren C3 und C4 relativ kleine Koppelkondensatoren. Es können gepolte Elektrolytkondensatoren verwendet werden.

Aus Figur 7 ist zu ersehen, wie durch Aufstocken dieser Zusatzspannung ihr Betrag erhöht werden kann. Das Aufstocken geschieht dadurch, daß der Minuspol des zweiten Gleichrichters GL2 mit dem Pluspol des ersten Gleichrichters GL1 verbunden ist. Die Zusatzspannung $V_2$ ist dann etwa dreimal so hoch wie die Spannung $+ V_1$.

Deutsche Thomson-Brandt GmbH
Postfach 2060
7730 Villingen-Schwenningen

**0176823**

8. August 1984
T-PA 512

Figurenlegende
---------------

$W_1$   Primärwicklung

$W_2$   Sekundärwicklung

$W_3$   Sekundärwicklung

$C_1$   Kondensator

$C_2$   Kondensator

$C_3$   Koppelkondensator

$C_4$   Koppelkondebsator

$C_5$   Ladekondensator

$C_6$   Ladekondensator

$C_7$   Ladekondensator

$GL_1$  Graetzgleichrichter

$GL_2$  Graetzgleichrichter

1   Anschlußpunkt   der Netzwechselspannung

2   Anschlußpunkt   der Netzwechselspannung

7

Deutsche Thomson-Brandt GmbH
Postfach 2060
7730 Villingen-Schwenningen
**0176823**
8. August 1984
T-PA 512

Patentansprüche
------------------

1. Spannungsvervielfacherschaltung zur Gewinnung von
   zwei um den Faktor zwei verschiedenen Gleichspannungen durch Graetzgleichrichtung aus einer Sekundärwicklung des Netztransformators, d a d u r c h
   g e k e n n z e i c h n e t, daß ein zweiter Graetzgleichrichter mit seinen Wechselspannungsanschlüssen
   über je einen Kondensator an die Sekundärwicklung angeschlossen ist und daß ein Gleichspannungspol dieses
   zweiten Gleichrichters mit dem entgegengesetzten
   Gleichspannungspol des ersten Gleichrichters verbunden ist.

2. Spannungsvervielfacherschaltung gemäß Anspruch 1,
   d a d u r c h   g e k e n n z e i c h n e t, daß
   durch Erdung des Verbindungspunktes beider Graetzgleichrichter und Hochlegen der beiden freien Gleichspannungspole gegenüber der Masse zwei im Betrag
   etwa gleiche, jedoch entgegengesetzt gepolte Gleichspannungen zur Verfügung stehen.

3. Spannungsvervielfacherschaltung zur Gewinnung einer
   dritten, um den Faktor drei höheren Gleichspannung
   als die beiden einzelnen, gegengepolten und aus einer
   Sekundärwicklung des Netztransformators mit Mittelanzapfung mittels Graetzgleichrichtung gewonnenen

Deutsche Thomson-Brandt GmbH
Postfach 20 60
7730 Villingen-Schwenningen

**0176823**

8. August 1984
T-PA 512

Gleichspannung, d a d u r c h   g e k e n n -
z e i c h n e t, daß ein zweiter Graetzgleichrichter mit seinen Wechselspannungsanschlüssen
über je einen Kondensator an die Wechselspannungspole dieser Wicklung angeschlossen ist und einer
seiner Gleichstromanschlüsse mit dem entgegengesetzt gepolten Gleichstromanschluß des ersten
Graetzgleichrichters verbunden ist.

4. Spannungsvervielfacherschaltung gemäß Anspruch 3,
   d a d u r c h   g e k e n n z e i c h n e t, daß
   der zweite Graetzgleichrichter mit einem Gleichstrompol an Masse liegt, so daß sein hochliegender
   Pol die doppelte Spannung gegenüber den beiden aus
   dem ersten Graetzgleichrichter gewonnenen Spannungen
   erzeugt, wobei die Polung dieser Spannung frei
   wählbar ist.

0176823

Fig.1

ST.d.T.

Fig.2

Std.d.T.

+V2 ≈ 2×V1

Fig.3

Std.d.T.

0176823

Fig.4

Fig.5

0176823

Fig. 6

Fig. 7

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | GB-A- 943 241 (MARCONI) <br> * Seite 1, Zeile 52 - Seite 2, Zeile 10; Figur 2 * <br> --- | 1 | H 02 M 7/10 |
| A | DE-A-2 034 523 (WINKLER) <br> * Seite 9, letzter Absatz; Figur 2 * <br> ----- | 1 | |

RECHERCHIERTE
SACHGEBIETE (Int. Cl 4)

H 02 M
H 02 J
G 01 R

Der vorliegende Recherchenbericht wurde für alle Patentansprüche erstellt

| Recherchenort | Abschlußdatum der Recherche | Prüfer |
|---|---|---|
| DEN HAAG | 17-12-1985 | KERN H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1401 03.82